(19) Europäisches Patentamt
European Patent Office
Office européen des brevets

(11) **EP 4 167 356 A1**

(12) **EUROPEAN PATENT APPLICATION**

(43) Date of publication:
**19.04.2023  Bulletin 2023/16**

(21) Application number: **22201487.0**

(22) Date of filing: **14.10.2022**

(51) International Patent Classification (IPC):
**H01M 50/103** (2021.01)     **H01M 50/15** (2021.01)
**H01M 50/636** (2021.01)     **H01M 50/645** (2021.01)

(52) Cooperative Patent Classification (CPC):
**H01M 50/103; H01M 50/15; H01M 50/636;
H01M 50/645;** Y02E 60/10; Y02P 70/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2021  CN 202122502834 U**

(71) Applicants:
• **Shenzhen Hairun New Energy Technology Co.,
Ltd.**
**Shenzhen, Guangdong 518057 (CN)**
• **Xiamen Hithium Energy Storage Technology Co.,
Ltd.**
**Xiamen City, Fujian Province 361000 (CN)**

(72) Inventors:
• **XU, Weidong**
**Xiamen City, 361000 (CN)**
• **ZHANG, Nan**
**Xiamen City, 361000 (CN)**
• **TANG, Yang**
**Xiamen City, 361000 (CN)**
• **YI, Ziqi**
**Xiamen City, 361000 (CN)**
• **WU, Zuyu**
**Xiamen City, 361000 (CN)**

(74) Representative: **Herzog IP Patentanwalts GmbH
Steinstraße 16-18
40212 Düsseldorf (DE)**

(54)   **TOP COVER FOR A BATTERY**

(57)    The present disclosure relates to a top cover for a battery which belongs to the technical field of batteries, comprising: a top cover body; a liquid injection hole formed in the top cover body and having a first side face; a sealing pin accommodated in the liquid injection hole and having a second side face, wherein the first side face is parallel to the second side face, there exists a gap between the first side face and the second side face; and a welding part connecting the sealing pin and the top cover body, and filling at least part of the gap.

Fig. 4

EP 4 167 356 A1

## Description

## Cross Reference to Related Application

The present disclosure claims the benefit of priority to Chinese patent application No. 202122502834.0, filed on October 18, 2021 to China National Intellectual Property Administration and titled "Top cover for a battery", which is incorporated herein by reference in its entirety.

## Technical Field

The present disclosure relates to the technical field of batteries, in particular to a top cover for a battery.

## Background

In an existing battery, sealing of a liquid injection hole of a top cover for a battery is generally realized by matching a sealing pin with the liquid injection hole. The existing sealing pin usually has a groove design on the surface to release a stress (waste gas) when the sealing pin is welded with the liquid injection hole, so as to achieve an effect of welding without cracking. However, the groove design on the surface of the sealing pin will add one process, which will also increase cost under the condition of increasing working hours. If the sealing pin has no groove design on the surface, the stress will not be released during a welding process between the sealing pin and the liquid injection hole, which will lead to a high probability of cracking at a welding position.

## Summary

The present disclosure provides a top cover for a battery, which is used to solve the problem that a liquid injection hole of an existing top cover for a battery is sealed by matching a sealing pin with the liquid injection hole; and if a stress cannot be released in a sealing process, there will be a high probability of cracking at a welding position.

The present disclosure provides a top cover for a battery, which comprises:

　　a top cover body;
　　a liquid injection hole formed in the top cover body and having a first side face;
　　a sealing pin accommodated in the liquid injection hole and having a second side face,
　　wherein the first side face is parallel to the second side face, with a gap between the first side face and the second side face; and
　　a welding part connecting the sealing pin and the top cover body, and filling at least part of the gap.

In the solution, the top cover body has the liquid injection hole for injecting an electrolyte. The sealing pin is accommodated in the liquid injection hole, which is used to seal the liquid injection hole, isolate a battery cell from the external environment, ensure a chemical environment required for the battery to work, and prevent the electrolyte from leaking. There is a gap between the first side face of the liquid injection hole and the second side face of the sealing pin. The welding part connects the sealing pin and the top cover body, and fills at least part of the gap. The gap can release a stress in a welding process; and a groove does not need to be designed on the surface of the sealing pin, thereby reducing processing cost of the sealing pin. The first side face of the liquid injection hole is designed to be parallel to the second side face of the sealing pin, so that distances between upper and lower surfaces of the gap are the same. Therefore, stresses on upper and lower surfaces of a welding position are the same during shock cooling and shock heating before and after welding, thereby greatly reducing a risk of cracking at the bottom or top of the welding position.

In a possible design, the welding part has a bottom end of a molten pool; and there is a set distance between the bottom end of the molten pool and the bottom of the gap.

In the solution, during the welding process, a high-temperature welding liquid enters the gap to melt the adjacent sealing pin and liquid injection hole; and the melted sealing pin and liquid injection hole structures form the welding part together with the welding liquid. There is a set distance between the bottom of the molten pool and the bottom of the gap, which can better release the stress, thereby greatly reducing a risk of cracking at the bottom or top of the welding position.

In a possible design, the liquid injection hole comprises a first liquid injection hole and a second liquid injection hole which are communicated with each other; and the first liquid injection hole has the first side face;

　　the sealing pin is accommodated in the first liquid injection hole; and
　　the top cover for a battery further comprises a sealing column which is accommodated in the second liquid injection hole.

In the solution, the liquid injection hole comprises the first liquid injection hole and the second liquid injection hole which are communicated with each other. When the sealing pin is installed, the sealing column is first accommodated in the second liquid injection hole; and then the sealing pin is accommodated in the first liquid injection hole, which can effectively prevent the sealing pin 3 from falling out or shifting before welding.

In a possible design, the first liquid injection hole has a top diameter ranging from 2mm to 50mm.

In the solution, by limiting the top diameter of the first liquid injection hole, it is more convenient to inject an electrolyte; and the diameter also matches a design dimension of the sealing pin to achieve more effective stress release.

In a possible design, the first liquid injection hole has a top diameter ranging from 7mm to 10mm.

In a possible design, the first liquid injection hole has a bottom diameter ranging from 2mm to 50mm.

In the solution, by limiting the bottom diameter of the first liquid injection hole, it is more convenient to inject an electrolyte; and the diameter also matches a design dimension of the sealing pin to achieve more effective stress release.

In a possible design, the first liquid injection hole has a bottom diameter ranging from 7mm to 10mm.

In a possible design, the gap has a width of less than or equal to 0.5 mm.

In a possible design, the width of the gap is 0.2mm.

In the solution, the stress in the welding process can be released more fully by limiting the dimension of the gap width.

In a possible design, the first liquid injection hole has a first bottom face; the sealing pin has a second bottom face. An included angle between the first side face and the first bottom face and an included angle between the second side face and the second bottom face satisfy:

$$M = N + K,$$

where M is the included angle between the first side face and the first bottom face; N is the included angle between the second side face and the second bottom face; and

angle K has a range of from-10° to 10°.

In the solution, the included angle between the first side face and the first bottom face and the included angle between the second side face and the second bottom face are limited, which is beneficial to welding of the sealing pin and the top cover body.

In a possible design, a depth of the first liquid injection hole and a thickness of the sealing pin satisfy: $A = B + C$,

where A is the depth of the first liquid injection hole; B is the thickness of the sealing pin; and a dimension range of C is 0-1mm.

In one possible design, the dimension of C is 0.05 mm.

In the solution, the relative dimensions of the depth of the first liquid injection hole and the thickness of the sealing pin are limited, so that the depth of the first liquid injection hole is greater than or equal to that of the sealing pin; and the sealing pin can be accommodated in the first liquid injection hole more smoothly and stably.

In a possible design, after welding, the sealing pin is 1±0.05mm beyond the first liquid injection hole.

In the solution, after welding, the sealing pin will exceed the first liquid injection hole by a certain height. If the height is too low, top sticking of a patch will be affected; and if the height is too high, the appearance of the top-stuck patch will be bad.

In a possible design, both the first side face and the second side face are inclined faces.

In the solution, the first side face of the first liquid injection hole and the second side face of the sealing pin are designed as the inclined faces, so that the sealing pin can be accommodated in the first liquid injection hole more smoothly during installation; and the design of the inclined faces can prolong the length of the gap. In this way, during welding, more welding liquid can be filled in the gap, so that the liquid injection hole and the sealing pin can be connected more firmly.

In a possible design, the top cover body has a top-cover top face; and an included angle α between the first side face and the top-cover top face is greater than or equal to 90° and less than 180°.

In the solution, the included angle α between the first side face and the top-cover top face of the top cover body is limited, so that the first side face can keep an appropriate inclination angle; installation of the sealing pin can be smoother; the gap can be maintained at a more appropriate length; and tightness of welding can be ensured.

The present disclosure further provides a secondary battery, which comprises:

a housing with an opening;
an electrode assembly accommodated in the housing, and having a negative electrode sheet, a positive electrode sheet and an isolation film arranged between the negative electrode sheet and the positive electrode sheet; and
the top cover for a battery which covers the opening of the housing to seal the electrode assembly in the housing.

It should be understood that the above general description and the following detailed description are exemplary only, and do not limit the present disclosure.

**Brief Description of Figures**

Fig. 1 is a top view of a top cover for a battery provided by the present disclosure in a specific embodiment;
Fig. 2 is a cross-sectional view of a top cover for a battery provided by the present disclosure in a specific embodiment;
Fig. 3 is a schematic structural diagram of a liquid injection hole of the present disclosure;
Fig. 4 is an enlarged view of I in Fig. 1;
Fig. 5 is a schematic structural diagram of II in Fig.

4 before welding; and
Fig. 6 is a schematic structural diagram of II in Fig. 4 after welding.

Reference numerals:

1-top cover body;
11-top-cover top face;
2-liquid injection hole;
21-first liquid injection hole;
210-gap;
211-first side face;
212-first bottom face;
22-second liquid injection hole;
3-sealing pin;
31-second side face;
32-top face of sealing pin;
33-second bottom face;
4-welding part;
41-bottom end of molten pool;
5-sealing column;
6-electrode terminal.

The drawings herein are incorporated into and constitute a part of the specification, illustrate embodiments consistent with the present disclosure, and together with the specification, serve to explain the principle of the present disclosure.

**Detailed Description**

To better understand the technical solutions of the present invention, embodiments of the present invention are described in detail below in combination with the drawings.

It should be clear that the described embodiments are merely part of the embodiments of the present invention, not all of the embodiments. Based on the embodiments in the present disclosure, all other embodiments obtained by those skilled in the art without contributing inventive efforts will fall in the protection scope of the present disclosure.

The terms used in the embodiments of the present disclosure are only for the purpose of describing specific embodiments, and are not intended to limit the present disclosure. The singular forms "a", "said" and "the" used in the embodiments of the present disclosure and the appended claims are intended to include plural forms unless the context clearly dictates other meanings.

It should be understood that the term "and/or" used herein is only an association relationship to describe associated objects, indicating that there may be three relationships, for example, A and/or B, which may indicate three conditions: A exists alone, A and B exist simultaneously, and B exists alone. In addition, the character "/" herein generally indicates that the related objects are an "or" relationship.

It should be noted that the directional words such as "up", "down", "left", and "right" described in the embodiments of the present disclosure are described from the angles shown in the drawings, and should not be construed as limiting the embodiments of the present disclosure. In addition, herein, it should also be understood that when an element is referred to as being "on" or "under" another element, it can not only be directly connected "on" or "under" the other element, but also indirectly connected "on" or "under" another element through intermediate elements.

Embodiments of the present disclosure provide a secondary battery, which comprises a housing, an electrode assembly and a top cover for a battery.

The housing may be hexahedral or other shapes. An accommodating cavity is formed inside the housing for accommodating the electrode assembly and an electrolyte; one end of the housing is opened, so that the electrode assembly can be placed in the accommodating cavity of the housing through the opening; a plurality of electrode assemblies can be arranged in the accommodating cavity; and the electrode assemblies are stacked on each other. Specifically, the housing may contain metal materials, such as aluminum or aluminum alloy, or insulating materials, such as plastic.

The electrode assembly comprises an electrode unit and tabs, wherein the electrode unit comprises a negative electrode sheet, a positive electrode sheet and an isolation film. The isolation film is located between the adjacent negative electrode sheet and positive electrode sheet, and is used for separating the negative electrode sheet from the positive electrode sheet.

In one possible design, the negative electrode sheet, the isolation film and the positive electrode sheet are stacked and wound in sequence to form the electrode unit of the electrode assembly, that is, the electrode unit has a wound structure. In another possible design, the negative electrode sheet, the isolation film and the positive electrode sheet are stacked in sequence to form the electrode unit of the electrode assembly, which has a laminated structure. Meanwhile, after the electrode unit is formed, there is a gap; and electrolyte can enter the electrode unit through the gap, infiltrating the negative electrode sheet and the positive electrode sheet.

The negative electrode sheet comprises a negative current collector (such as a copper foil) and a negative active material layer (such as carbon or silicon) coated on the surface of the negative current collector. The positive electrode sheet comprises a positive current collector (such as an aluminum foil) and a positive active material layer (such as a ternary material, ferrous lithium phosphate or lithium cobaltate) coated on the surface of the positive current collector. A negative tab is connected with the negative electrode sheet and extends out of the electrode unit; and the negative tab can be directly formed by cutting the negative current collector. The positive tab is connected with the positive electrode sheet and extends out of the electrode unit; and the positive tab can be directly formed by cutting the positive current collector.

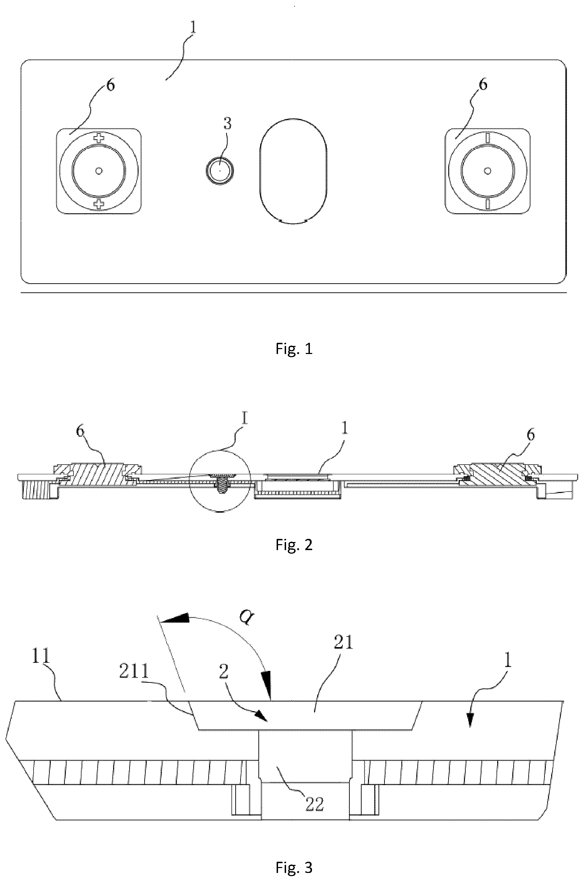

The embodiment of the present disclosure further provides a top cover for a battery, as shown in Figs. 1 to 4. The top cover for a battery includes a top cover body 1, a liquid injection hole 2, a sealing pin 3 and a welding part 4. The top cover body 1 is fixed at the opening of the housing, so as to seal the electrode assembly and electrolyte in an accommodating cavity of the housing. Electrode terminals 6 are arranged at the top cover body 1 and include a negative electrode terminal and a positive electrode terminal; and the two electrode terminals 6 are electrically connected with the corresponding tabs through adapting pieces. The liquid injection hole 2 is formed in the top cover body 1 for injecting the electrolyte. The sealing pin 3 is accommodated in the liquid injection hole 2, and is used for sealing the liquid injection hole 2, so that a battery cell is isolated from the external environment; a chemical environment required for the battery to work is ensured; and the electrolyte can be prevented from leaking.

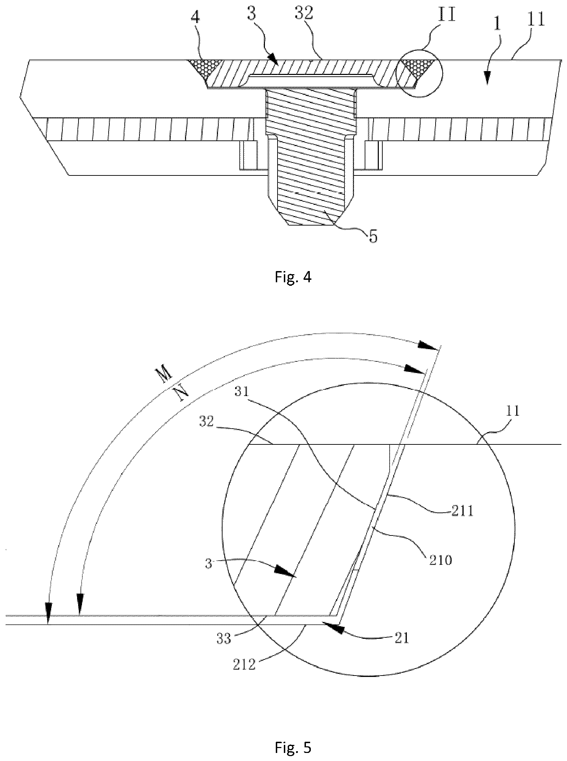

Specifically, as shown in Figs. 3 and 5, the liquid injection hole 2 has a first side face 211. As shown in Fig. 5, the sealing pin 3 has a second side face 31. The first side face 211 is parallel to the second side face 31; and there is a gap 210 between the first side face 211 and the second side face 31. The welding part 4 connects the sealing pin 3 and the top cover body 1, and fills at least part of the gap 210.

In the present embodiment, there is a gap 210 between the first side face 211 of the liquid injection hole 2 and the second side face 31 of the sealing pin 3. The welding part 4 connects the sealing pin 3 and the top cover body 1, and fills at least part of the gap 210. The gap 210 can release a stress in a welding process; and a groove does not need to be designed on the surface of the sealing pin 3, thereby reducing processing cost of the sealing pin. The first side face 211 of the liquid injection hole 2 is designed to be parallel to the second side face 31 of the sealing pin 3, so that distances between upper and lower surfaces of the gap 210 are the same, so that stresses on upper and lower surfaces of the welding position are the same during shock cooling and shock heating before and after welding, thereby greatly reducing a risk of cracking at the bottom or top of a welding position.

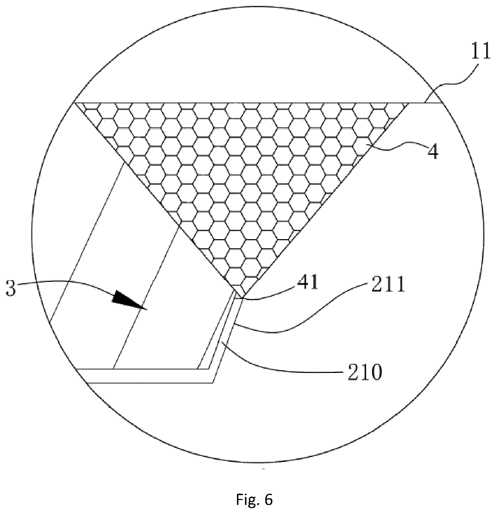

In another specific embodiment, as shown in Fig. 6, the welding part 4 has a bottom end 41 of a molten pool; and there is a set distance between the bottom end 41 of the molten pool and the bottom of the gap 210.

In the present embodiment, during the welding process, a high-temperature welding liquid enters the gap 210 to melt the adjacent sealing pin 3 and liquid injection hole 2; and the melted sealing pin 3 and liquid injection hole 2 form the welding part 4 together with the welding liquid. There is a set distance between the bottom end 41 of the molten pool and the bottom of the gap 210, which can better release the stress, thereby greatly reducing a risk of cracking at the bottom or top of the welding position.

In a specific embodiment, as shown in Fig. 3, the liquid injection hole 2 comprises a first liquid injection hole 21 and a second liquid injection hole 22 which are communicated with each other. The first liquid injection hole 21 has a first side face 211.

As shown in Fig. 4, the sealing pin 3 is accommodated in the first liquid injection hole 21. The top cover for a battery further comprises a sealing column 5; and the sealing column 5 is accommodated in the second liquid injection hole 22.

In the present embodiment, the liquid injection hole 2 comprises a first liquid injection hole 21 and a second liquid injection hole 22 which are communicated with each other. When the sealing pin 3 is installed, the sealing column 5 is first accommodated in the second liquid injection hole 22; and then the sealing pin 3 is accommodated in the first liquid injection hole 21, which can effectively prevent the sealing pin 3 from falling out or shifting before welding.

In another specific embodiment, the first liquid injection hole 21 may have a top diameter ranging from 2 mm to 50 mm.

In the present embodiment, by limiting the top diameter of the first liquid injection hole 21, it is more convenient to inject the electrolyte; and the diameter also matches with a design dimension of the sealing pin 3 to achieve more effective stress release. When the top diameter of the first liquid injection hole 21 is less than 2mm, the first liquid injection hole 21 is too small, which makes it difficult to inject the electrolyte. When the top diameter of the first liquid injection hole 21 is larger than 50mm, the first liquid injection hole 21 is too large, which will have a certain impact on strength of the top cover body 1 and is not conducive to release of the stress.

Specifically, the first liquid injection hole 21 may have a top diameter ranging from 7mm to10mm, more specifically 7.92 mm.

In a specific embodiment, he first liquid injection hole 21 may have a bottom diameter ranging from 2mm to50 mm.

In the present embodiment, by limiting the bottom diameter of the first liquid injection hole 21, it is more convenient to inject the electrolyte; and the diameter also matches a design dimension of the sealing pin 3 to achieve more effective stress release. When the bottom diameter of the first liquid injection hole 21 is less than 2mm, a liquid injection channel is too small, which makes it difficult to inject the electrolyte. When the bottom diameter of the first liquid injection hole 21 is greater than 50mm, it will have a certain impact on strength of the top cover body 1, and is not conducive to release of the stress.

Specifically, the first liquid injection hole 21 may have a bottom diameter ranging from 7mm to10mm, more specifically 7.24 mm.

In another specific embodiment, athe gap 210 has a width of less than or equal to 0.5 mm. Preferably, the width of the gap 210 is 0.2 mm.

In the present embodiment, by limiting the width of the gap 210, the stress in the welding process can be more fully released.

In a specific embodiment, as shown in Fig. 5, the first liquid injection hole 21 has a first bottom face 212; and the sealing pin 3 has a second bottom face 33. An included angle between the first side face 211 and the first bottom face 212 and an included angle between the second side face 31 and the second bottom face 33 satisfy: M = N + K.

M is the included angle between the first side face 211 and the first bottom face 212. N is the included angle between the second side face 31 and the second bottom face 33. aAngle K has a range of from -10° to 10°.

In the present embodiment, the included angle between the first side face 211 and the first bottom face 212 and the included angle between the second side face 31 and the second bottom face 33 are limited, which is beneficial to welding of the sealing pin 3 and the top cover body 1.

In another specific embodiment, a depth of the first liquid injection hole 21 and a thickness of the sealing pin 3 satisfy: A = B + C. A is the depth of the first liquid injection hole 21. B is the thickness of the sealing pin 3. a dimension range of C is 0-1mm. Preferably, the dimension of C is 0.05 mm.

In the present embodiment, relative dimensions of the depth of the first liquid injection hole 21 and the thickness of the sealing pin 3 are limited, so that the depth of the first liquid injection hole 21 is greater than or equal to that the sealing pin 3; and the sealing pin 3 can be accommodated in the first liquid injection hole 21 more smoothly and stably.

In a specific embodiment, after welding, the sealing pin 3 is $1\pm0.05$mm beyond the first liquid injection hole 21.

In the present embodiment, after welding, the sealing pin 3 will exceed the first liquid injection hole 21 by a certain height. If the height is too low, top sticking of a patch will be affected; and if the height is too high, the appearance of the top-stuck patch will be poor.

In another embodiment, both the first side face 211 and the second side face 31 may be inclined faces.

In the present embodiment, the first side face 211 of the first liquid injection hole 21 and the second side face 31 of the sealing pin 3 are designed as inclined faces. During installation, the sealing pin 3 can be accommodated in the first liquid injection hole 21 more smoothly; and design of the inclined faces can extend the length of the gap 210. During welding, more welding liquid can be filled in the gap 210, so that the liquid injection hole 2 and the sealing pin 3 can be connected more firmly.

In a specific embodiment, as shown in Fig. 3, the top cover body 1 has a top-cover top face 11; and an included angle α between the first side face 211 and the top-cover top face 11 is greater than or equal to 90° and less than 180°.

In the present embodiment, the included angle α between the first side face 211 and the top-cover top face 11 of the top cover body 1 is limited, so that the first side face 211 can maintain a proper inclination angle; installation of the sealing pin 3 can be smoother; the gap 210 can maintain a more appropriate length; and tightness of welding can be ensured.

In another specific embodiment, as shown in Fig. 4, the sealing pin 3 has a sealing pin top face 32; and after welding, the sealing pin top face 32 is flush with the top-cover top face 11.

In the present embodiment, the sealing pin top face 32 of the sealing pin 3 is flush with the top-cover top face 11, which can ensure surface flatness of the whole top cover for a battery. In this way, the top cover for a battery will not occupy too much space after being assembled; and an energy density of the secondary battery is improved.

The above description only involves the preferred embodiments of the present disclosure, and is not intended to limit the present disclosure. For those skilled in the art, the present disclosure can be modified and varied. Any modification, equivalent substitution, improvement, etc. made within the spirit and principle of the present disclosure shall be included in the scope of protection of the present disclosure.

**Claims**

1. A top cover for a battery, comprising:

   a top cover body (1);
   a liquid injection hole (2) formed in the top cover body (1) and having a first side face (211);
   a sealing pin (3) accommodated in the liquid injection hole (2) and having a second side face (31),
   wherein the first side face (211) is parallel to the second side face (31), with a gap (210) between the first side face (211) and the second side face (31); and
   a welding part (4) connecting the sealing pin (3) and the top cover body (1), and filling at least part of the gap (210).

2. The top cover for a battery according to claim 1, wherein the welding part (4) has a bottom end (41) distant from a bottom of the gap (210).

3. The top cover for a battery according to claim 1, wherein the liquid injection hole (2) comprises a first liquid injection hole (21) and a second liquid injection hole (22) which are communicated with each other; and the first liquid injection hole (21) has the first side face (211);

the sealing pin (3) is accommodated in the first liquid injection hole (21); and
the top cover for a battery further comprises a sealing column (5) which is accommodated in the second liquid injection hole (22).

4. The top cover for a battery according to claim 3, wherein the first liquid injection hole (21) has a top diameter ranging from 2mm to 50mm.

5. The top cover for a battery according to claim 4, wherein the top diameter of the first liquid injection hole (21) ranges from 7mm to 10mm.

6. The top cover for a battery according to claim 3, wherein the first liquid injection hole (21) has a bottom diameter ranging from 2mm to 50mm.

7. The top cover for a battery according to claim 6, wherein the bottom diameter of the first liquid injection hole (21) ranges from 7mm to 10mm.

8. The top cover for a battery according to claim 3, wherein the gap (210) has a width of less than or equal to 0.5mm.

9. The top cover for a battery according to claim 3, wherein the first liquid injection hole (21) has a first bottom face (212); the sealing pin (3) has a second bottom face (33); an included angle between the first side face (211) and the first bottom face (212) and an included angle between the second side face (31) and the second bottom face (33) satisfy:

$$M = N + K,$$

where M is the included angle between the first side face (211) and the first bottom face (212); N is the included angle between the second side face (31) and the second bottom face (33); angle K ranges from -10° to 10°.

10. The top cover for a battery according to claim 3, wherein a depth of the first liquid injection hole (21) and a thickness of the sealing pin (3) satisfy:

$$A = B + C,$$

where A is the depth of the first liquid injection hole (21); B is the thickness of the sealing pin (3); C ranges from 0mm to 1mm.

11. The top cover for a battery according to claim 10, wherein C is 0.05 mm.

12. The top cover for a battery according to claim 10, wherein after welding, the sealing pin (3) is 1±0.05mm beyond the first liquid injection hole (21).

13. The top cover for a battery according to claim 1, wherein both the first side face (211) and the second side face (31) are inclined faces.

14. The top cover for a battery according to claim 13, wherein the top cover body (1) has a top face (11); and an included angle $\alpha$ between the first side face (211) and the top face (11) is greater than or equal to 90° and less than 180°.

15. A secondary battery, comprising:

a housing with an opening;
an electrode assembly accommodated in the housing, and having a negative electrode sheet a positive electrode sheet and a separator arranged between the negative electrode sheet and
the positive electrode sheet; and
the top cover for a battery of claim 1, which covers the opening of the housing to seal the electrode assembly in the housing.

Fig. 1

Fig. 2

Fig. 3

Fig. 4

Fig. 5

Fig. 6

Europäisches
Patentamt

European
Patent Office

Office européen
des brevets

# EUROPEAN SEARCH REPORT

Application Number

**EP 22 20 1487**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/138492 A1 (LIN WENFA [CN] ET AL) 17 May 2018 (2018-05-17) * paragraphs [0052] - [0054]; figures 1-14 * | 1-3,5, 7-14 | INV. H01M50/103 H01M50/15 H01M50/636 H01M50/645 |
| X | US 2013/115492 A1 (AOTA KINYA [JP]) 9 May 2013 (2013-05-09) * paragraphs [0045], [0050] - [0052], [0059], [0061]; figures 1-19 * | 1-15 | |
| X | US 2002/004168 A1 (IWATA MIKIO [JP] ET AL) 10 January 2002 (2002-01-10) * paragraphs [0037] - [0042]; figures 1-7 * | 1-15 | |
| A | CN 109 078 929 A (WUHAN YIFI LASER EQUIP CO LTD) 25 December 2018 (2018-12-25) * paragraph [0038]; figures 1-2 * | 1-15 | |

TECHNICAL FIELDS
SEARCHED        (IPC)

H01M

The present search report has been drawn up for all claims

| Place of search | Date of completion of the search | Examiner |
|---|---|---|
| Munich | 23 February 2023 | Monti, Adriano |

EPO FORM 1503 03.82 (P04C01)

## ANNEX TO THE EUROPEAN SEARCH REPORT
## ON EUROPEAN PATENT APPLICATION NO.

**EP 22 20 1487**

This annex lists the patent family members relating to the patent documents cited in the above-mentioned European search report.
The members are as contained in the European Patent Office EDP file on
The European Patent Office is in no way liable for these particulars which are merely given for the purpose of information.

**23-02-2023**

| Patent document cited in search report | | Publication date | Patent family member(s) | | Publication date |
|---|---|---|---|---|---|
| US 2018138492 | A1 | 17-05-2018 | CN | 204809306 U | 25-11-2015 |
| | | | US | 2018138492 A1 | 17-05-2018 |
| | | | WO | 2017008577 A1 | 19-01-2017 |
| US 2013115492 | A1 | 09-05-2013 | CN | 102986062 A | 20-03-2013 |
| | | | JP | 5520721 B2 | 11-06-2014 |
| | | | JP | 2012018861 A | 26-01-2012 |
| | | | KR | 20130036260 A | 11-04-2013 |
| | | | US | 2013115492 A1 | 09-05-2013 |
| | | | WO | 2012005020 A1 | 12-01-2012 |
| US 2002004168 | A1 | 10-01-2002 | JP | 2000090913 A | 31-03-2000 |
| | | | US | 2002004168 A1 | 10-01-2002 |
| CN 109078929 | A | 25-12-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202122502834